# EUROPEAN PATENT SPECIFICATION

(11) **EP 1 135 021 B1**
(45) Date of publication and mention of the grant of the patent: **09.06.2004**
(21) Application number: 99958459.2
(22) Date of filing: 03.12.1999
(51) Int. Cl.: A01N 25/18

(54) **SUSTAINED RELEASE DISPERSIONS OF POLYMER-BASED WATER INSOLUBLE BEADS**
DISPERSIONEN WASSERUNLÖSLICHER PARTIKEL AUF POLYMERBASIS MIT VERZÖGERTER FREIGABE
DISPERSIONS DES BILLES INSOLUBLES DANS L'EAU, A BASE DE POLYMERE ET A DIFFUSION PROLONGEE

(30) Priority: 03.12.1998 IL 12739698
(43) Date of publication of application: 26.09.2001
(73) Proprietor: Ben Gurion University Of The Negev Research And Development Authority, 84105 Beer Sheva (IL); YISSUM RESEARCH AND DEVELOPMENT CO., 91042 Jerusalem (IL)
(72) Inventor: SHANI, Arnon, 84965 Omer (IL); MAGDASSI, Shlomo, 96626 Jerusalem (IL); YOSHA, Ido, 85142 Mobile Post Hanegev (IL)
(74) Representative: Ablewhite, Alan James
(86) International application number: PCT/IL1999/000660
(87) International publication number: WO 2000/032043

(56) References cited:
- EP-A- 0 617 051
- GB-A- 2 129 302
- GB-A- 2 141 932
- US-A- 4 401 456
- DATABASE WPI Section Ch, Week 198334 Derwent Publications Ltd., London, GB; Class A97, AN 1983-744808 XP002136272 & JP 58 121212 A (NITTO ELECTRIC IND CO), 19 July 1983 (1983-07-19)
- MEINKE L J ET AL: "PHEROMONE DELIVERY SYSTEM: WESTERN CORN ROOTWORM (COLEOPTERA: CHRYSOMELIDAE) PHEROMONE ENCAPSULATION IN A STARCH BORATE MATRIX" JOURNAL OF ECONOMIC ENTOMOLOGY,US,ENTOMOLOGICAL SOCIETY OF AMERICA. COLLEGE PARK, MARYLAND, vol. 82, no. 6, 1 December 1989 (1989-12-01), pages 1830-1835, XP000086080 ISSN: 0022-0493

## Description

The present invention relates to a sustained release dispersion of water insoluble beads and to a process for the preparation thereof. More particularly, the present invention relates to a sustained release dispersion of water insoluble beads each bead comprising a polymeric matrix comprised of a protein and a polysaccharide and containing at least one volatile hydrophobic component for release therefrom in atmospheric air.

U.S. Patents 4,400,391 and 4,401,456 describe and claim alginate gel beads containing bioactive materials dispersed therein. These beads can be made to either float or sink in aqueous environments, and are capable of providing the controlled release of their bioactive materials when applied to terrestrial or aqueous environments.

The prior art deals with the controlled and/or sustained release of various materials from polysaccharide beads such as from alginate gel beads into aqueous or wet environments, however the release of hydrophobic volatile materials into the atmosphere from such a bead is neither taught nor suggested in the prior art.

With this state of the art in mind, there is now provided according to the present invention a sustained release dispersion of water insoluble beads, each bead comprising a polymeric matrix comprised of a protein and a polysaccharide and containing a plurality of emulsion droplets, said droplets being formed from at least one surface active molecule, at lease one volatile hydrophobic component and water, wherein said volatile component is released from said water insoluble bead in atmospheric air.

In especially preferred embodiments of the present invention, said polysaccharide is selected from the group consisting of sodium alginate, carraggenan, guar gum, locus bean gum, chitosan, pectin carboxy methyl cellulose.

In other preferred embodiments of the present invention, said protein is selected from the group consisting of gelatin, albumin, casein and Lactoglobulin.

In preferred embodiments of the present invention said surface active molecule is selected from the group consisting of a protein, a monomeric surfactant and a polymeric surfactant.

In especially preferred embodiments of the present invention, said surface active molecule is selected from the group consisting of ethoxylated sorbitan ester, aklyl ether, a block copolymer and geletin. Preferably, said bead is of a size between 0.5 micron and 1 mm and especially preferred are beads of a size between 5 and 80 microns.

In preferred embodiments of the present invention said volatile component is an attractant which is preferably selected from the group consisting of eugenol, benzyl alcohol, leaf alcohols, aldehydes and acetates.

In other preferred embodiments of the present invention said volatile component is an attractant inhibitor which is preferably selected from the group consisting of (Z)-9-tetradecenyl formate and (E,E)-10,12-hexadecadienol.

In another aspect of the present invention there is now provided a process for preparing sustained-release polymer-based water insoluble beads for release of a volatile hydrophobic component therefrom in atmospheric air, comprising:
a) preparing an oil/water emulsion by homogenizing a volatile hydrophobic component in water, using at leas one surface active molecule;
b) mixing said emulsion with at least one water-soluble polymer and optionally rehomogenizing the mixture; and
c) adding the emulsion prepared in step (b) in a dropwise manner into a gellant solution to form said water insoluble beads.

In preferred embodiments of the present invention said process further comprises the step of chemically cross-linking polymers present in said composition and further comprises the step of drying said beads.

The beads prepared by the process of this invention are useful in providing sustained release of volatile materials contained therein, when exposed to the atmosphere. As long as the dispersion of beads are kept in water, the volatile material is not released.

Said oil in water emulsion is preferably prepared by homogenization of the volatile hydrophobic component in a gelatin solution. A water-soluble salt of alginic acid is mixed with water and added to the solution. The mixture is then homogenized again, and added dropwise into an aqueous solution of di-, tri- or quatra-valent metal salt (called the gellant solution) that will cause the alginate to form gel. As each drop comes in contact with the metal salt solution, the gelation is initiated and a bead forms. Further treatment of the water insoluble beads with tannic acid solution over night is possible if an extended delay of the release of the volatile material is desired.

More particularly, the invention describes the process and the product, which is the formulation for a slow release of pheromones.

The abstract of JP 58 121212 (D1) discloses a gel like body for sustained release of a volatile substance. The polymer is comprised of sodium polyacrylate having at least one epoxy group per molecule and a cationic surfactant. The resulting gel like body which is composed of synthetic polymers is different from the polymeric beads of the present invention, which are based on biopolymers, proteins and polysaccharide. The use of biopolymers has significant advantages based on environmental considerations.

GB 2, 129,302 (D2) describes a method of treating a ground area with a substance which is dispersed within a polymeric material. The method of preparation of the product described therein is completely different from that of the present invention and is based on polymerization of synthetic monomers, which forms a large body of polymeric material, which has to be sliced or diced or otherwise divided into small particles. In contradistinstinction the present invention deals only with biopolymers and the cross-linking of polymers which were already formed by multivalent electrolytes leading to small particles. In addition, since this method is based on chemical reaction, the monomers may react with the active substance.

US Patent 4,401,456 (D3) describes a method for preparing alginate beads containing bioactive material, which mainly is released by leaching. The beads do not contain, as in the present invention, a protein, in addition to the alginate and said patent suggests only the use of alginate and not the use of other polysaccharides.

GB 2,141,932 (D4) discloses pest control composition based on a pheromone in a liquid or semi-liquid polymeric water resistant matrix allowing sustained release of the pheromone. Unlike the present invention, the composition is not based on beads, does not contain water and surfactant, and is based on synthetic polymers.

EP 0 617 051 describes polymeric compositions for controlled release of substances, in the form of emulsions which are used for impregnation or coating articles. In said Patent, unlike the present invention, the polymers are synthetic and the active substance is in direct contact with the monomers and therefore may react with the monomers and lose it's activity.

In Journal of Economic Entomology, 82(6), 1 December 1989, pages 1830-1835, Meinke L J et al: describes a pheromone delivery system which is encapsulated in a starch borate matrix. The formulation is completely different than the compositions described in the present invention.

### DETAILED DESCRIPTION OF THE PRESENT INVENTION

In substantial similarity to U.S. 4,401, 456, the simplicity of requirements needed for carrying out the process of the present invention permits much latitude in design of equipment. A suitable apparatus, as described below, is brought only for the purpose of illustration and not to be construed as limiting the invention. The apparatus consists of a reservoir to contain the alginate/protein/volatile- material/water emulsion that is equipped with a stopcock or similar device that allows the dropwise addition of the mixture through an orifice. The gellant solution may be contained in any convenient vessel.

After a suitable amount of time within the gellant solution, the resulting gel beads are removed by means such as filtration, screening, or straining. They may be rinsed in plain water if desired.

Beads may be further stirred in tannic acid solution and then rinsed again if a longer release-time of the volatile material is desired

The beads can be used in this fully hydrated state or dried to any desired moisture content without losing their effectiveness. Small hard granules result when the beads are dried. The hydrophobic oil which is present within the beads, e.g. a pheromone, can be released slowly, to the atmosphere. The rate of release can be sustained by suitable selection of the concentration of the alginate, proteins, tannic acid and additional components such as polyethylene glycol, urea and electrolytes.

The rate of addition of the mixture from the reservoir is a function of orifice size and the number of orifices used. The above rate can be increased by applying air or piston pressure.

The distance between the orifice and the surface of the gellant solution should be far enough to allow the droplet to penetrate the surface of the gellant solution.

The size of the resulting alginate gel beads depends on the viscosity of the alginate/volatile material/water mixture, the amount of water retained in the beads, and orifice size. An orifice of 0.1-5 mm in diameter is suitable, but the preferred range is 0.8-2 mm. Beads will be generally spherical or ellipsoidal with an average diameter of 0.1-6 mm. Smaller beads, down to micron in size, may be prepared by spraying the alginate/volatile material/water mixture into the gellant bath.

A continuous process of producing beads is possible and requires continuous removal of gel beads and maintenance of the gellant concentration. It is also possible to extrude the alginate/volatile- material/ water mixture into the gellant to form a string-like gel, which can be cut into various lengths or dried and ground into granules.

Hydrated (undried) beads will usually be stored in water. The well-known phenomenon of syneresis can occur with alginate gels as well as with many other polysaccharide gels. Specifically, it is the loss of fluid (mostly water in the present invention), from the gel caused by contraction. Most of the fluid loss occurs within the 24-hour period after preparation, but it can continue for a few weeks before coming to equilibrium. Some factors that influence the amount of syneresis are alginate composition, cross-linking of the gelatin with tannic acid, temperature, gellant and the chemical nature of the volatile material. Usually the fluid that is exuded during the first 36 hours, is principally water and only a relatively small amount of volatile material is lost.

The protein used in the emulsion preparation of the present invention is a B type gelatin, but other proteins may be used as well. The concentration of the protein may vary widely and will influence the release rate of the volatile component/s.

The alginates used in the invention are any water-soluble salts of alginic acid. These include sodium, potassium, magnesium and ammonium alginate, and the alginates of organic bases such as amines. Sodium alginate is preferred. The viscosity of the alginate may vary and will influence gel strength to some degree. Highly refined alginates are not required for the practice of this invention.

An especially preferred alginate is the alginic acid, sodium salt, LX0450, available from MCB Manufacturing Chemists Inc., Cincinnati, Ohio, having a bulk density of 689 kg/m³ (43 lbs./cu ft), a pH of 7.2 in a 1% aqueous solution, and a viscosity (run with a Brookfield LVF @ 60 RPM) of 400 @ 1% and 3500 @ 2%.

Concentration of the alginate formulated in the initial alginate/volatile material/water mixture is 0.1-3% by weight, but 1-1.5% is usually preferred. The volatile materials referred to in this invention are any volatile bioactive materials, such as pheromones, essential oils, pesticides, fragrances, etc.

The excellent chemical compatibility of alginates allows admixture according to the present invention with a very wide choice of volatile materials such as those described above. They are too numerous to list in their entirety. The following are only a few of the pheromones that can be used, given for the purpose of illustration and should not be construed as limiting the scope of the invention. The common name is given first, followed by the chemical name.

| **Common name** | **Chemical name** |
|---|---|
| Muscamone | (Z)-9-tricosene |
| Gossyplure | (ZZ)-7,11-hexadecadien-1-ol acetate, and (Z,E)-7,11-hexadecadien-1-ol acetate |
| Disparlure | cis-7,8-epoxy-2-methyloctadecane |
| Grandlure | (1*R*-cis)-1-methyl-2-(1-methylethenyl cyclobutaneethanol; (Z)-2-(3,3-dimethylcyclohexylidene)ethanol (Z)-(3,3-dimethylcyclohexylidene) acetaldehyde; and (E)-(3,3-dimethylcyclohexylidene) acetaldehyde |

It is an important part of this invention that additional control over rate of release of these types of volatile materials may be achieved. This may be achieved by interaction between the components of the formulation with the active materials.

Concentration of the volatile material formulated in the alginate/protein/volatile material/water mixture can be as high as 50% by weight, but is preferably in the range of 0.1-20%. The ingredients of this mixture may be incorporated in any order desired prior to the emulsification process. The preferred pH range of the mixture is 4-12. The usual and preferred temperature of the mixture is 20-30°C, but may be higher to reduce viscosity.

Cations that will gel alginate solutions are the cations of barium, lead, copper, iron, strontium, cadmium, calcium, zinc, nickel; aluminum, tin, acid (H⁺), and mixtures of these. The gellant solution of the present invention consists of an aqueous solution of a soluble and ionized salt of a metal listed above, an acid, or a mixture of these. Choice of gellant will have an effect on gel properties and possibly on the release rate of the volatile material dispersed in the alginate gel bead. The preferred gellants are the chlorides and acetates of calcium, barium and copper; the preferred acids are hydrochloric and acetic. Concentration of the metal salt or acid in the gellant solution may be up to 50% by weight, though 1-15% is preferred. Gelation proceeds faster as the concentration is increased. Reaction with sodium alginate and certain volatile materials will reduce the effective concentration of gellant cations, therefore a sufficient concentration must be maintained to provide the desired properties.

Temperature of the gellant solution can affect gel properties. It is an advantage of the present invention, which involve volatile materials that heat does not have to be employed and most products can be made at 1-30°C. The preferred range is 20-30°C. However, any temperature up to, and including, the boiling point of the gellant solution may be used. Reaction of the alginate/volatile material/water mixture with the gellant solution is very rapid and produces a distinct gel bead immediately. Gelation proceeds from the outer surface to the center of the bead. Final gel properties such as hardness, pore size, surface area, strength, elasticity, size, durability, and release rate of the volatile material are influenced by the time within the gellant solution and should be optimized for each product. Generally, a residence time of 0.1-25 minutes may be used, but 1-10 minutes is usually sufficient.

In certain applications it may be desirable to add other ingredients to the alginate/volatile material/water mixture or to the gellant solution, or to the final gel beads. These additives may serve to alter the rate of release of the volatile material, protect the gel beads from microbial attack or oxidation, facilitate the preparation process or reduce syneresis. They include solubilizing agents, biocides such as formaldehyde, enzymes, organic solvents, surfactants, viscosity modifiers, filmforming agents, natural and synthetic gums, sequestering agents, starch, talc, fibers, light-screening chemicals and antioxidants.

Sustained release refers to formulations or materials that dispense their active ingredients into the environment over a period of time in a constant rate. For the purpose of this invention this time period can be short and measured in minutes or hours, or long and measured in days or even months. In the present invention, release of the volatile material from the alginate beads occurs through processes such as leaching, diffusion, dissolution, and degradation in atmospheric air.

Sustained release materials may be used to reduce the number of applications needed to perform a certain task, permit an effective (while not too high) concentration in the environment at any one time, and enhance effectiveness against the target species.

This invention is suitable for producing alginate gel beads containing volatile material, said beads being useful for agricultural, industrial, domestic and health-related purposes.

While the invention will now be described in connection with certain preferred embodiments in the following examples so that aspects thereof may be more fully understood and appreciated, it is not intended to limit the invention to these particular embodiments. On the contrary, it is intended to cover all alternatives, modifications and equivalents as may be included within the scope of the invention as defined by the appended claims. Thus, the following examples which include preferred embodiments will serve to illustrate the practice of this invention, it being understood that the particulars shown are by way of example and for purposes of illustrative discussion of preferred embodiments of the present invention only and are presented in the cause of providing what is believed to be the most useful and readily understood description of formulation procedures as well as of the principles and conceptual aspects of the invention.

### EXAMPLE 1

3 grams of gelatin_type B were dissolved in 97 grams of water. 5 grams of dodecyl acetate and 3.4 grams of water were added to 16.6 grams of the solution, and the mixture was homogenized for 5 minutes (9500 R.P.M). 2 grams of sodium alginate were dissolved in 98 grams of water, and 25 grams of the solution were added to the solution of gelatin and dodecyl acetate. The whole mixture was homogenized for 5 minutes (9500 R.P.M).
The solution was added dropwise through a syringe equipped with a 22G x 1½ needle, falling a distance of 60 mm, into 150 ml of 1% CaCl₂ solution. The CaCl₂ solution was contained in a 150 mm diameter vessel, and stirred with a magnetic stirrer in a rate of about 120 R.P.M. The rate of addition was such that 5 minutes were required for the 50g addition to take place. The beads formed (2 mm idiameter) were left in the solution for 5 additional minutes. The beads were then separated by filtration through a sieve, washed in water and stored in water. When air-dried, the beads became hard granules of about 1 mm in diameter.
Release rate was measured - see sample A in Table 1.

### EXAMPLE 2

Beads were made in the same manner as in example 1, using CaCl₂ 0.25% as the gellant solution.
Release rate was measured - see sample B in Table 1.

### EXAMPLE 3

Beads were made in the same manner as in example 1, using CaCl₂ 0.1% as the gellant solution.
Release rate was measured - see sample C in Table 1.

### EXAMPLE 4

Beads were made in the same manner as in example 1, with 1% gelatin as the protein.
Release rate was measured - see sample D in Table 1.

### EXAMPLE 5

Beads were made in the same manner as in example 1, with 0.5% gelatin as the protein.
Release rate was measured - see sample E in Table 1.

### EXAMPLE 6

Beads were made in the same manner as in example 1, with 0.6% alginate.
Release rate was measured - see sample F in Table 1.

### EXAMPLE 7

Alginate beads containing dodecyl acetate were prepared as in example 1, but using FeCl₃ as the gellant solution.

### EXAMPLE 8

Alginate beads containing dodecyl acetate were prepared as in example 1, but using SnCl₄ as the gellant solution.

### EXAMPLE 9

Alginate beads containing dodecyl acetate were prepared as in example 1, but the beads formed were left over night in a 1% tannic acid solution. The beads were then washed in water and stored in water.
Release rate was measured - see sample G in Table 1.

### EXAMPLE 10

3 grams of gelatin were dissolved in 97 grams of water. 5 grams of Gossyplure (Pink Bollworm pheromone) and 3.4 grams of water were added to 16.6 grams of the solution, and the mixture was homogenized for 5 minutes (9500 R.P.M). 2 grams of sodium alginate were dissolved in 98 grams of water, and 12.5 grams of the solution were added to the solution of gelatin and Gossyplure. The whole mixture was homogenized for 5 minutes (9500 R.P.M). The resulting emulsion was processed as in example 1 to produce alginate gel beads containing Gossyplure.
Release rate was measured see sample H in Table 1 and Figure 1.

### EXAMPLE 11

3 grams of gelatin were dissolved in 97 grams of water. 5 grams of Eugenol and 3.3 grams of water were added to 16.6 grams of the solution, and the mixture was homogenized for 5 minutes (9500 R.P.M). 3 grams of sodium alginate were dissolved in 97 grams of water, and 25 grams of the solution were added to the solution of gelatin and Eugenol. The whole mixture was homogenized for 5 minutes (9500 R.P.M).
The solution was added dropwise through a syringe equipped with a 18G x 1 ½ needle, falling a distance of 500 mm, into 150 ml of 0.25% CaCl₂ solution. The CaCl₂ solution was contained in a 150 mm diameter vessel, and stirred with a magnetic stirrer in a rate of about 120 R.P.M. The rate of addition was such that 5 minutes were required for the 50g addition to take place. The beads formed (2 mm in diameter) were left in the solution for 5 additional minutes. The beads were then separated by filtration through a sieve, washed in water and left overnight in a 1% tannic acid solution. The beads were then washed and stored in water. When air-dried, the beads became hard granules of about 0.5 mm in diameter.
Release rate was measured - see sample I in Table 1.

### EXAMPLE 12

Beads were made from an emulsion of 10% Eugenol, 1% gelatin and 1.5% alginate, in the same manner described above. The beads were placed in traps that were placed in a peanut- field. Together with these traps, reference traps that contained live virgin females of the beetle *Maladera Matrida Argaman* were placed in the field. After ten days, the traps containing the eugenol beads trapped as many beetles as the traps with the live females.

### EXAMPLE 13

Beads were made from an emulsion of 10% pheromone of the *Pink Bollworm* moth, 1% gelatin and 1% alginate, in the same manner described above. The beads were placed in bags, containing 200 mg of dry beads each. 25 bags were placed in a cotton field, forming a square of 50X50 meters. Reference traps containing pheromone impregnated in cardboard were placed in the middle of the square and in the field, away from the experiment. In a 43 day period, the reference traps in the field around the experiment trapped much more moths than the trap in the middle of the square as described in Table 2 hereinafter:

### EXAMPLE 14

3 grams of gelatin Type B 75 Bloom were dissolved in 97 grams of water. 5 grams of pink bollworm pheromone and 3.4 grams of water were added to 16.6 grams of the solution, and the mixture was homogenized for 5 minutes (9500 R.P.M). 2 grams of sodium alginate were dissolved in 98 grams of water, and 25 grams of the solution were added to the solution of gelatin and dodecyl acetate. The whole mixture was homogenized for 5 minutes (9500 R.P.M).
The solution was sprayed through an atomizer (BETE fog nozzle FC7, 1/4 XA, cap AC1201) into 150 ml of 1% CaCl₂ solution. The CaCl₂ solution was contained in a 150 mm diameter vessel, and stirred with a magnetic stirrer in a rate of about 120 R.P.M. The rate of spraying was such that few seconds were required for the 50 g addition to take place. The beads formed (0.01-0.3 mm in diameter) were left in the solution for 5 additional minutes. The beads were then separated by filtration through a sieve, washed in water and stored in water. When dried in room temperature, the beads became hard granules of about 0.005-0.15 mm in diameter. Release rate was measured outdoors over prolonged period of time, and it was found that the formulation yields a slow release of the volatile hydrophobic component. The amounts released were as described in Table 3, and in sample J in Table 1.

### EXAMPLE 15

Micron-size particles were prepared as in example 14, but using gelatin Type B 225 Bloom as the protein.

The sprayable formulation (micron size particles in 50 ml of water) was added to 15 L of water and sprayed in a cotton field using a backpack sprayer. Release rate was measured outdoors over prolonged period of time, and it was found that the formulation yields a slow release of the volatile hydrophobic component. The amounts released were as described in Table 3, and in sample K in Table 1.
Reference traps containing pheromone impregnated in cardboard were placed in the middle of the square and in the field, away from the experiment. In a 21 days period, the reference traps in the field around the experiment trapped much more moths than the trap in the middle of the square as described in Table 4.

### EXAMPLE 16

3 grams of gelatin type B 75 Bloom were dissolved in 97 grams of water. 5 grams of Codling moth pheromone and 3.4 grams of water were added to 16.6 grams of the solution, and the mixture was homogenized for 5 minutes (9500 R.P.M). 24 grams of acrylate solution (Joncryl SCX 8089) were dissolved in 6 grams of water, and 25 grams of the solution were added to the solution of gelatin and pheromone. The whole mixture was homogenized for 5 minutes (9500 R.P.M).
The solution was added dropwise through a syringe equipped with a 22G x 1 ½ needle, falling a distance of 60 mm, into 150 ml of 5% CaCl₂ solution. The CaCl₂ solution was contained in a 150 mm diameter vessel, and stirred with a magnetic stirrer in a rate of about 120 R.P.M. The rate of addition was such that 5 minutes were required for the 50g addition to take place. The beads formed (2 mm in diameter) were left in the solution for 5 additional minutes. The beads were then separated by filtration through a sieve, washed in water and stored in water. When air-dried, the beads became hard granules of about 1 mm in diameter.

### EXAMPLE 17

Beads were made in the same manner as in example 1, using Codling moth pheromone.

### EXAMPLE 18

An emulsion was made in the same manner as in example 16. The emulsion was added to a gellant solution of CaCl₂ 5% using a spraying device as in Example 14, to form micron size particles.

### EXAMPLE 19

An emulsion was made in the same manner as in example 16 and added dropwize to 150 ml of glacial acetic acid to form beads of around 2 mm in diameter. The beads were left in the acid for about 5 minutes and then filtered and washed thoroughly with water to remove the acid.

### EXAMPLE 20

An emulsion was made in the same manner as in example 16. The emulsion was added to a glacial acetic acid using a spraying device as in example 14, to form micron size particles. The particles were left in the acid for few minutes and then filtered and washed with water and kept wet in water.

### EXAMPLE 21

0.5 g of Tween 80 were added to 5 grams of Codling- moth pheromone and 19.5 grams of water, and the mixture was homogenized for 5 minutes (9500 R.P.M). 2 g of sodium alginate were dissolved in 98 grams of water, and 25 grams of the solution were added to the emulsion of the pheromone and Tween 80. The whole mixture was homogenized for 5 minutes (9500 R.P.M).
The solution was added dropwise through a syringe equipped with a 22G x 1 ½ needle, falling a distance of 60 mm, into 150 ml of 5% CaCl₂ solution. The CaCl₂ solution was contained in a 150 mm diameter vessel, and stirred with a magnetic stirrer in a rate of about 120 R.P.M. The rate of addition was such that 5 minutes were required for the 50g addition to take place. The beads formed (2 mm in diameter) were left in the solution for 5 additional minutes. The beads were then separated by filtration through a sieve, washed in water and stored in water. When air-dried, the beads became hard granules of about 1 mm in diameter.

### EXAMPLE 22

An emulsion was made in the same manner as in example 21. The emulsion was added to a gellant solution of CaCl₂ 1% using a spraying device as in example 14, to form micron size particles.

### EXAMPLE 23

0.5 g of Tween 80 were added to 5 grams of Codling- moth pheromone and 19.5 grams of water, and the mixture was homogenized for 5 minutes (9500 R.P.M). 24 grams of acrylate solution (Joncryi SCX 8089) were dissolved in 6 grams of water, and 25 grams of the solution were added to the solution of Tween 80 and pheromone. The whole mixture was homogenized for 5 minutes (9500 R.P.M).
The solution was added dropwise through a syringe equipped with a 22G x 1 ½ needle, falling a distance of 60 mm, into 150 ml of 5% CaCl₂ solution. The CaCl₂ solution was contained in a 150 mm diameter vessel, and stirred with a magnetic stirrer in a rate of about 120 R.P.M. The rate of addition was such that 5 minutes were required for the 50g addition to take place. The beads formed (2 mm in diameter) were left in the solution for 5 additional minutes. The beads were then separated by filtration through a sieve, washed in water and stored in water. When air-dried, the beads became hard granules of about 1 mm in diameter.

### EXAMPLE 24

An emulsion was made in the same manner as in example 23. The emulsion was added to a gellant solution of CaCl₂ 5% using a spraying device as in example 14, to form micron size particles.

### EXAMPLE 25

An emulsion was made in the same manner as in example 23 and added dropwise to 150 ml of glacial acetic acid to form beads of around 2 mm in diameter. The beads were left in the acid for about 5 minutes and then filtered and washed thoroughly with water to remove the acid.

### EXAMPLE 26

An emulsion was made in the same manner as in example 23. The emulsion was added to a glacial acetic acid using a spraying device as in example 14, to form micron size particles. The particles were left in the acid for few minutes and then filtered and washed with water and kept wet in water.

Using the beads and micron size particles made by the examples above, the amount of volatile material released to the atmosphere was measured resulting in the amounts outlined in Table 1.

**TABLE 1:**

| Sample | Example | Wet Bead diameter (mm) | Dry bead diameter (mm) | Wet bead Weight (mg) | Dry bead Weight (mg) | weight of active ingredient released (% of total) |
|---|---|---|---|---|---|---|
| A | 1 | 1.5-2 | 1 - 1.5 | 4 - 5 | 1-2 | 32 (after 63 days) |
| B | 2 | 1.5 - 2 | 1 - 1.5 | 4 - 5 | 1 - 2 | 45 (after 37 days) |
| C | 3 | 1.5 - 2 | 1 - 1.5 | 4 - 5 | 1 - 2 | 35 (after 37 days) |
| D | 4 | 1.5 - 2 | 1 - 1.5 | 4 - 5 | 1 - 2 | 10 (after 52 days) |
| E | 5 | 1.5 - 2 | 1 - 1.5 | 4 - 5 | 1 - 2 | 80 (after 52 days) |
| F | 6 | 1.5 - 2 | 1 - 1.5 | 4 - 5 | 1 - 2 | 75 (after 63 days) |
| G | 9 | 1 - 1.5 | 1 | 4 - 5 | 1 - 2 | 50 (after 42 days) |
| H | 10 | 1.5 - 2 | 1 - 1.5 | 4 - 5 | 1 - 2 | 40 (after 90 days) |
| I | 11 | 2 - 3 | 0.5 - 1 | 5 | 0.5 - 1 | 85 (after 21 days) |
| J | 14 | 0.005-0.1 | ― | ― | ― | 90 (after 22 days) |
| K | 15 | 0.005-0.1 | ― | ― | ― | 65 (after 37 days) |

**TABLE 2:**

| | Average number of moths per trap per day | | | | | |
|---|---|---|---|---|---|---|
| | After 5 days | After 7 days | After 13 days | After 24 days | After 37 days | After 43 days |
| Experiment | 0 | 3 | 1 | 2 | 0 | 3 |
| Control | 12 | 32 * | 9 | 42 * | 40 | 30 |

| | | | | | | |
|---|---|---|---|---|---|---|
| * The field was sprayed against PBW one day after the count. | | | | | | |

**TABLE 3:**

| Number of days | 0 | 5 | 10 | 15 | 22 | 35 |
|---|---|---|---|---|---|---|
| Percent released 75 Bloom | 0 | 25 | 70 | 80 | 90 | 95 |
| Percent released 225 Bloom | 0 | 18 | 35 | 40 | 50 | 70 |

**TABLE 4:**

| Average number of moths per trap per day | | | |
|---|---|---|---|
| | After 5 days | After 12 days | After 20 days |
| Experiment | 0 | 0 | 1 |
| Control | 7.5 | 16 | 25 |

## Claims

1. A sustained release dispersion of polymer-based, water insoluble beads, comprising a polymeric matrix comprised of a protein and a polysaccharide and containing a plurality of emulsion droplets, said droplets being formed from at least one surface active molecule, at least one volatile hydrophobic component and water, wherein said volatile component is released from said water insoluble bead in atmospheric air.

2. A sustained release dispersion of polymer-based, water insoluble beads, according to claim 1 wherein said protein is selected from the group consisting of gelatin, albumin, casein and lactoglobulin, or said polysaccharide is selected from the group consisting of alginate, chitin, carrageenan, guar gum, locus bean gum, chitosan, pectin carboxymethyl cellulose.

3. A sustained release dispersion of polymer-based, water insoluble beads, according to claim 1, wherein said surface active molecule is selected from the group consisting of a protein, a monomeric surfactant and a polymeric surfactant.

4. A sustained release dispersion of polymer-based, water insoluble beads, according to claim 1, wherein said surface active molecule is selected from the group consisting of ethoxylated sorbitan ester, alkyl ether and a block copolymer.

5. A sustained release dispersion of polymer-based, water insoluble beads, according to claim 1, wherein said bead is of a size between 0.5 micron and 1 mm.

6. A sustained release dispersion of polymer-based, water insoluble beads, according to claim 1, wherein said bead is of a size between 5 and 80 microns.

7. A sustained-release dispersion of polysaccharide-protein water insoluble bead according to claim 1, comprising an emulsion of at least one protein and at least one volatile hydrophobic component contained therein, wherein said volatile component is release from said water insoluble bead in atmospheric air.

8. A sustained-release dispersion of polymer-based, water insoluble beads, according to any of claims 1 to 7, wherein said volatile component is selected from a bioactive material, a pheromone, an essential oil, a pesticide, an attractant, and an attractant inhibitor.

9. A sustained-release dispersion of polymer-based beads according to claim 8, wherein said pheromone is selected from the group consisting of grandlure, muscalure, gossyplure and disparlure.

10. A sustained-release dispersion of polymer-based beads according to claim 8, wherein said attractant is selected from the group consisting of eugenol, benzyl alcohol, 3-hexen-1-ol, aldehydes and acetates.

11. A sustained-release dispersion of polymer-based beads according to claim 8, wherein said attractant inhibitor is selected from the group consisting of (Z)-9-tetradecenyl formate and (E,E)-10,12-hexadecadienol.

12. A sustained-release dispersion of polymer-based beads according to any of claims 1 to 11, wherein said volatile component is present in an amount of up to 50% wt./wt.

13. A sustained-release dispersion of polymer-based bead according to claim 12, wherein said volatile component is present in an amount of up to 20% wt./wt.

14. A sustained-release dispersion of polymer-based beads according to any of claims 1 to 13, wherein said protein is a gelatin.

15. A sustained-release dispersion of polymer-based beads according to claim 14, wherein said gelatin is a type B gelatin.

16. A sustained-release dispersion of polymer-based beads according to any of claims 1 to 15, wherein said volatile component is eugenol.

17. A sustained-release dispersion of polymer-based beads according to any of claims 1 to 16, further comprising tannic acid for effecting a slower release rate.

18. A process for preparing a sustained-release dispersion of polymer-based water insoluble beads for release of a volatile hydrophobic component therefrom in atmospheric air according to any of claims 1 to 17, comprising:
a) preparing an oil/water emulsion by homogenizing a volatile hydrophobic component in water, using at least one surface active molecule;
b) mixing said emulsion with at least one water-soluble polymer and optionally rehomogenizing the mixture; and
c) adding the emulsion prepared in step (b) in a dropwise manner into a gellant solution to form said water insoluble beads.

19. A process according to claim 18, further comprising the step of chemically cross-linking polymers present in said composition.

20. A process according to claim 18, further comprising the step of drying said beads.

21. A process according to claim 18, wherein said gellant solution is selected from the group consisting of an electrolyte solution, a multivalent ion solution, a lower pH solution and a high pH solution.

22. A process according to claim 18, wherein said gellant is an aqueous metal salt solution.

23. A process according to claim 22, wherein said aqueous metal salt solution comprises a divalent or trivalent metal salt.

24. A process according to claim 23, wherein said metal salt solution comprises chlorides and acetates of calcium, barium and copper.

25. A process according to claim 18, wherein the emulsion of step (b) is sprayed into said gellant to form micron-sized beads.

26. A process according to any of claims 18 to 25, wherein said polysaccharide is an alginate.

27. A process according to claim 26, wherein said alginate is a water-soluble salt of alginic acid selected from the salts with water-soluble salts of organic bases, sodium, potassium, magnesium, ammonium alginate and amines.

28. A process according to claim 26, wherein said alginate is present in an amount of about between 0.1 and 5% wt./wt.

29. A process according to claim 28, wherein said alginate is present in an amount of about between 1 and 1.5% wt./wt.

## Patentansprüche

1. Dispersion wasserunlöslicher Kügelchen auf Polymerbasis mit verzögerter Freisetzung, aufweisend eine Polymermatrix aus einem Protein und einem Polysaccharid und enthaltend eine Vielzahl von Emulsionströpfchen, wobei die Tröpfchen aus mindestens einem oberflächenaktiven Molekül, mindestens einer flüchtigen, hydrophoben Komponente und Wasser gebildet werden, wobei die flüchtige Komponente aus den wasserunlöslichen Kügelchen an die atmosphärische Luft freigesetzt wird.

2. Dispersion wasserunlöslicher Kügelchen auf Polymerbasis mit verzögerter Freisetzung nach Anspruch 1, worin das Protein ausgewählt ist aus der Gruppe, bestehend aus Gelatine, Albumin, Casein und Lactoglobulin, oder worin das Polysaccharid ausgewählt ist aus der Gruppe, bestehend aus Alginat, Chitin, Irisches Moos, Guarmehl, Johannisbrotmehl, Chitosan, Pektin, Carboxymethylcellulose.

3. Dispersion wasserunlöslicher Kügelchen auf Polymerbasis mit verzögerter Freisetzung nach Anspruch 1, worin das oberflächenaktive Molekül ausgewählt ist aus der Gruppe, bestehend aus einem Protein, einem monomeren Tensid und einem polymeren Tensid.

4. Dispersion wasserunlöslicher Kügelchen auf Polymerbasis mit verzögerter Freisetzung nach Anspruch 1, worin das oberflächenaktive Molekül ausgewählt ist aus der Gruppe, bestehend aus ethoxyliertem Sorbitanester, Alkylether und einem Blockcopolymer.

5. Dispersion wasserunlöslicher Kügelchen auf Polymerbasis mit verzögerter Freisetzung nach Anspruch 1, worin das Kügelchen eine Größe zwischen 0,5 Mikrometer und 1mm hat.

6. Dispersion wasserunlöslicher Kügelchen auf Polymerbasis mit verzögerter Freisetzung nach Anspruch 1, worin das Kügelchen eine Größe zwischen 5 und 80 Mikrometer hat.

7. Dispersion wasserunlöslicher Kügelchen aus Polysaccharid-Protein mit verzögerter Freisetzung nach Anspruch 1, aufweisend eine Emulsion von mindestens einem Protein und mindestens einer flüchtigen hydrophoben Komponente, die darin enthalten ist, wobei die flüchtige Komponente aus dem wasserunlöslichen Kügelchen in die atmosphärische Luft freigesetzt wird.

8. Dispersion wasserunlöslicher Kügelchen auf Polymerbasis mit verzögerter Freisetzung nach einem der Ansprüche 1 bis 7, worin die flüchtige Komponente ausgewählt ist aus einem bioaktiven Material, einem Pheromon, einem etherischen Öl, einem Pestizid, einem Lockstoff und einem Lockstoff-Inhibitor.

9. Dispersion von Kügelchen auf Polymerbasis mit verzögerter Freisetzung nach Anspruch 8, worin das Pheromon ausgewählt ist aus der Gruppe, bestehend aus Grandlure, Muscalure, Gossyplure und Disparlure.

10. Dispersion von Kügelchen auf Polymerbasis mit verzögerter Freisetzung nach Anspruch 8, worin der Lockstoff ausgewählt ist aus der Gruppe, bestehend aus Eugenol, Benzylalkohol, 3-Hexen-1-ol, Aldehyden und Acetaten.

11. Dispersion von Kügelchen auf Polymerbasis mit verzögerter Freisetzung nach Anspruch 8, worin der Lockstoff-Inhibitor ausgewählt ist aus der Gruppe, bestehend aus (Z)-9-Tetradecenylformiat und (E,E)-10,12-Hexadecadienol.

12. Dispersion von Kügelchen auf Polymerbasis mit verzögerter Freisetzung nach einem der Ansprüche 1 bis 11, worin die flüchtige Komponente in einer Menge von bis zu 50% (Gewicht/Gewicht) vorliegt.

13. Dispersion von Kügelchen auf Polymerbasis mit verzögerter Freisetzung nach Anspruch 12, worin die flüchtige Komponente in einer Menge von bis zu 20% (Gewicht/Gewicht) vorliegt.

14. Dispersion von Kügelchen auf Polymerbasis mit verzögerter Freisetzung nach einem der Ansprüche 1 bis 13, worin das Protein eine Gelatine ist.

15. Dispersion von Kügelchen auf Polymerbasis mit verzögerter Freisetzung nach Anspruch 14, worin die Gelatine eine Gelatine B ist.

16. Dispersion von Kügelchen auf Polymerbasis mit verzögerter Freisetzung nach einem der Ansprüche 1 bis 15, worin die flüchtige Komponente Eugenol ist.

17. Dispersion von Kügelchen auf Polymerbasis mit verzögerter Freisetzung nach einem der Ansprüche 1 bis 16, ferner aufweisend Gerbsäure, um eine geringere Freisetzungsgeschwindigkeit zu bewirken.

18. Verfahren zum Herstellen einer Dispersion wasserunlöslicher Kügelchen auf Polymerbasis mit verzögerter Freisetzung zum Freisetzen einer flüchtigen hydrophoben Komponente daraus an die atmosphärische Luft nach einem der Ansprüche 1 bis 17, umfassend:
(a) Herstellen einer Öl/Wasser-Emulsion durch Homogenisieren einer flüchtigen hydrophoben Komponente in Wasser, wobei mindestens ein oberflächenaktives Molekül verwendet wird;
(b) Mischen der Emulsion mit mindestens einem wasserlöslichen Polymer und wahlweise erneutes homogenisieren der Mischung; und
(c) Zusetzen der in Schritt (b) hergestellten Emulsion tropfenweise zu einer Lösung eines Gelbildners, um die wasserunlöslichen Kügelchen zu erzeugen.

19. Verfahren nach Anspruch 18, ferner umfassend den Schritt des chemischen Vernetzens der in der Zusammensetzung vorhandenen Polymere.

20. Verfahren nach Anspruch 18, ferner umfassend den Schritt des Trocknens der Kügelchen.

21. Verfahren nach Anspruch 18, bei welchem die Lösung des Gelbildners ausgewählt ist aus der Gruppe, bestehend aus einer Elektrolytlösung, einer Lösung eines mehrwertigen Ions, einer Lösung mit geringerem pH-Wert und einer Lösung mit hohem pH-Wert.

22. Verfahren nach Anspruch 18, bei welchem der Gelbildner eine wässrige Lösung eines Metallsalzes ist.

23. Verfahren nach Anspruch 22, bei welchem die wässrige Lösung des Metallsalzes ein zweiwertiges oder dreiwertiges Metallsalz aufweist.

24. Verfahren nach Anspruch 23, bei welchem die Lösung des Metallsalzes Chloride und Acetate von Calcium, Barium und Kupfer aufweist.

25. Verfahren nach Anspruch 18, bei welchem die Emulsion von Schritt (b) in den Gelbildner zur Erzeugung von Kügelchen in Mikrogröße gesprüht wird.

26. Verfahren nach einem der Ansprüche 18 bis 25, bei welchem das Polysaccharid ein Alginat ist.

27. Verfahren nach Anspruch 26, bei welchem das Alginat ein wasserlösliches Salz von Alginsäure ist, ausgewählt aus den Salzen von wasserlöslichen Salzen organischer Basen, Natrium-, Kalium-, Magnesium-, Ammoniumalginat und -aminen.

28. Verfahren nach Anspruch 26, bei welchem das Alginat in einer Menge zwischen etwa 0,1% und 5% (Gewicht/Gewicht) vorliegt.

29. Verfahren nach Anspruch 28, bei welchem das Alginat in einer Menge zwischen etwa 1% und 1,5% (Gewicht/Gewicht) vorliegt.

## Revendications

1. Dispersion à libération prolongée de billes à base d'un polymère insolubles dans l'eau, comprenant une matrice polymère qui consiste en une protéine et un polysaccharide et contient une pluralité de gouttelettes d'émulsion formées à partir d'au moins une molécule tensio-active, et au moins un composant hydrophobe volatile et de l'eau, ledit composant volatile étant libéré dans l'air atmosphérique à partir desdites billes insolubles dans l'eau.

2. Dispersion à libération prolongée de billes à base d'un polymère insolubles dans l'eau selon la revendication 1, dans laquelle ladite protéine est sélectionnée parmi le groupe consistant en la gélatine, l'albumine, la caséine et la lactoglobuline, ou ledit polysaccharide est sélectionné parmi le groupe consistant en l'alginate, la chitine, le carrageenan, la gomme guar, la gomme de caroube, le chitosane, la pectine et la carboxyméthylcellulose.

3. Dispersion à libération prolongée de billes à base d'un polymère insolubles dans l'eau selon la revendication 1, dans laquelle ladite molécule tensio-active est sélectionnée parmi le groupe consistant en une protéine, un surfactant monomère et un surfactant polymère.

4. Dispersion à libération prolongée de billes à base d'un polymère insolubles dans l'eau selon la revendication 1, dans laquelle ladite molécule tensio-active est sélectionnée parmi le groupe consistant en un ester de sorbitan éthoxylé, un éther d'alkyle et un copolymère à blocs.

5. Dispersion à libération prolongée de billes à base d'un polymère insolubles dans l'eau selon la revendication 1, dans laquelle la taille desdites billes est comprise entre 0,5 micron et 1 mm.

6. Dispersion à libération prolongée de billes à base d'un polymère insolubles dans l'eau selon la revendication 1, dans laquelle la taille desdites billes est comprise entre 5 et 80 microns.

7. Dispersion à libération prolongée de billes insolubles dans l'eau composées d'un polysaccharide et d'une protéine selon la revendication 1, qui comprend une émulsion d'au moins une protéine et d'au moins un composant hydrophobe volatile contenue dans lesdites billes, ledit composant volatile étant libéré dans l'air atmosphérique à partir desdites billes insolubles dans l'eau.

8. Dispersion à libération prolongée de billes à base d'un polymère insolubles dans l'eau selon l'une quelconque des revendications 1 à 7, dans laquelle ledit composant volatile est sélectionné parmi le groupe consistant en un matériau bioactif, une phéromone, une huile essentielle, un pesticide, une substance attractive ou l'inhibiteur d'une substance attractive.

9. Dispersion à libération prolongée de billes à base d'un polymère selon la revendication 8, dans laquelle ladite phéromone est sélectionnée parmi le groupe consistant en le grandlure, le muscalure, le gossyplure et le disparlure.

10. Dispersion à libération prolongée de billes à base d'un polymère selon la revendication 8, dans laquelle ladite substance attractive est sélectionnée parmi le groupe consistant en l'eugénol, l'alcool benzylique, le 3-hexen-1-ol, des aldéhydes et des acétates.

11. Dispersion à libération prolongée de billes à base d'un polymère selon la revendication 8, dans laquelle ledit inhibiteur d'une substance attractive est sélectionné parmi le groupe consistant en le formiate de (Z)-9-tétradécényle et le (E,E)-10,12-hexadécadiénol.

12. Dispersion à libération prolongée de billes à base d'un polymère selon l'une quelconque des revendications 1 à 11, dans laquelle ledit composant volatile est présent en une quantité ne dépassant pas 50 % p/p.

13. Dispersion à libération prolongée de billes à base d'un polymère selon la revendication 12, dans laquelle ledit composant volatile est présent en une quantité ne dépassant pas 20 % p/p.

14. Dispersion à libération prolongée de billes à base d'un polymère selon l'une quelconque des revendications 1 à 13, dans laquelle ladite protéine est une gélatine.

15. Dispersion à libération prolongée de billes à base d'un polymère selon la revendication 14, dans laquelle ladite gélatine est une gélatine de type B.

16. Dispersion à libération prolongée de billes à base d'un polymère selon l'une quelconque des revendications 1 à 15, dans laquelle ledit composant volatile est l'eugénol.

17. Dispersion à libération prolongée de billes à base d'un polymère selon l'une quelconque des revendications 1 à 16, qui comprend également de l'acide tannique pour produire un taux de libération plus lent.

18. Procédé pour la préparation d'une dispersion à libération prolongée de billes à base d'un polymère permettant de libérer un composant hydrophobe volatile contenu dans l'air atmosphérique à partir desdites billes selon l'une quelconque des revendications 1 à 17, le procédé comprenant:
(a) la préparation d'une émulsion huile/eau par homogénéisation d'un composant hydrophobe volatile dans de l'eau en utilisant au moins une molécule tensio-active;
(b) le mélange de ladite émulsion avec au moins un polymère soluble dans l'eau, suivi en option d'une réhomogénéisation du mélange; et
(c) l'addition, au goutte à goutte, de l'émulsion préparée à l'étape (b) dans une solution gélifiante pour former lesdites billes insolubles dans l'eau.

19. Procédé selon la revendication 18, qui comprend également une étape de réticulation chimique des polymères présents dans ladite composition.

20. Procédé selon la revendication 18, qui comprend également une étape de déshydratation desdites billes.

21. Procédé selon la revendication 18, dans lequel ladite solution gélifiante est sélectionnée parmi le groupe consistant en une solution électrolytique, une solution d'un ion multivalent, une solution à pH plus bas et une solution à pH élevé.

22. Procédé selon la revendication 18, dans lequel ledit gélifiant est une solution aqueuse d'un sel métallique.

23. Procédé selon la revendication 22, dans lequel ladite solution aqueuse d'un sel métallique comprend un sel métallique divalent ou trivalent.

24. Procédé selon la revendication 23, dans lequel ladite solution d'un sel métallique comprend des chlorures et acétate de calcium, baryum et cuivre.

25. Procédé selon la revendication 18, dans lequel l'émulsion préparée à l'étape (b) est pulvérisée sur ledit gélifiant pour former des billes de taille micronique.

26. Procédé selon l'une quelconque des revendications 18 à 25, dans lequel ledit polysaccharide est un alginate.

27. Procédé selon la revendication 26, dans lequel ledit alginate est un sel, soluble dans l'eau, de l'acide alginique sélectionné parmi les sels, solubles dans l'eau, de bases organiques, de sodium, de potassium, de magnésium, d'alginate d'ammonium et d'amines.

28. Procédé selon la revendication 26, dans lequel ledit alginate est présent en une quantité comprise entre 0,1 et 5 % p/p environ.

29. Procédé selon la revendication 28, dans lequel ledit alginate est présent en une quantité comprise entre 1 et 1,5 % p/p environ.
